(19) Europäisches Patentamt
European Patent Office
Office européen des brevets

(11) **EP 2 144 042 A2**

(12) **EUROPEAN PATENT APPLICATION**

(43) Date of publication:
**13.01.2010 Bulletin 2010/02**

(51) Int Cl.:
**G01D 5/244** (2006.01)

(21) Application number: **09164415.3**

(22) Date of filing: **02.07.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **07.07.2008 JP 2008176714**

(71) Applicant: **Canon Kabushiki Kaisha Tokyo 146-8501 (JP)**

(72) Inventor: **Seo, Yuzo Tokyo 146-8501 (JP)**

(74) Representative: **TBK-Patent Bavariaring 4-6 80336 München (DE)**

(54) **Measurement apparatus**

(57) A measurement apparatus of the present invention is configured to measure a position of an object to be measured using two signals approximated by a cosine function and a sine function representing the position of the object to be measured, the measurement apparatus including a regression arithmetic unit (7-1, 7-2) configured to perform a regression calculation for corresponding one of the two signals, an interpolation arithmetic unit (8-1, 8-2) configured to obtain a value at a specific phase of the corresponding one of the two signals using information calculated by the regression arithmetic unit, and an error correction portion (6-1, 6-2) configured to correct an error estimated from the value at the specific phase of the corresponding one of the two signals obtained by the interpolation arithmetic unit.

FIG. 3

**Description**

BACKGROUND OF THE INVENTION

Field of the Invention

The present invention relates to a measurement apparatus, and more particularly to a measurement apparatus which estimates an error contained in a position signal approximated by a cosine signal and a sine signal in a short period of time with high accuracy to be able to remove the error.

Description of the Related Art

As a measurement apparatus of a position or an angle, an encoder, an interferometer, or the like is widely industrially used. These measurement apparatuses output two position signals approximated by a cosine signal and a sine signal whose phase angles change in accordance with the position or the angle.

Fig. 4 schematically shows a structure of an optical linear encoder as one example of such measurement apparatuses. The optical linear encoder shown in Fig. 4 is constituted by a movable scale 1, a fixed scale 2, a light source 3, and a light receiving element 4.

Fig. 5 planarly shows the details of the movable scale 1, the fixed scale 2, and the light receiving element 4. The movable scale 1 is provided with a lot of slits at regular pitches p. The slits provided on the upper half and the lower half of the movable scale 1 have phases differing by 1/4 pitch (1/4p) from each other.

The fixed scale 2 is also provided with a lot of slits at the same pitch p as that of the movable scale 1. The slits provided on the right half and the left half of the fixed scale 2 have phases differing by 1/2 from each other.

The light receiving element 4 is so called a four-divided photo diode. The light receiving element 4 is provided with four light receiving portions on the left, right, top and bottom at a position corresponding to each of pattern areas (slit portions) of the movable scale 1 and the fixed scale 2. Therefore, the light receiving element 4 converts a light receiving amount in each of the four areas on the left, right, top and bottom into an electric signal to be outputted.

The four light receiving portions on the left, right, top and bottom of the light receiving element 4 output a cosine signal A (left upper), an inversion signal of the cosine signal A (right upper), a sine signal B (left lower), and an inversion signal of the sine signal B (right lower), respectively. The output signals from the light receiving element 4 is subtracted by the respective inversion signals by an operational amplifier circuit (not shown) to be outputted as a cosine signal and a sine signal.

When the position signal is obtained from these signals with high resolution, generally, a method of calculating a phase angle by an arctangent calculation to obtain a tiny position signal is performed after converting each signal into a digital signal.

However, due to the variation of a slit open area ratio of the scale, unevenness of the amplifying properties, or the like, the cosine signal and the sine signal have an error with respect to ideal cosine function and sine function, respectively. As a result, a phase angle obtained by the calculation also contains an error.

A method of correcting such an error by using a maximum value and a minimum value of the cosine signal and the sine signal has been known (for example, see U.S. Patent No. 4,458,322). In other words, an offset error contained in each signal is calculated as an average of the maximum value and the minimum value, and an amplitude error is calculated as unevenness of the difference between the maximum value and the minimum value.

When an incorporation amount of the error is estimated like this, in order to suppress the influence of the noise, a lot of maximum values and minimum values are measured to use an average value of these values. However, when the open area ratio of the scale differs in accordance with the area or the like, the incorporation amount of the error changes in accordance with the position of the scale. Therefore, there has been a problem that the method using a lot of maximum values and minimum values can not handle such a change of the error incorporation amount.

The inventor has discovered that the influences of the noise can be suppressed by performing a regression of each of signals approximated by the cosine function and the sine function with respect to time as a result of the research for solving such a problem.

SUMMARY OF THE INVENTION

The present invention provides a measurement apparatus which estimates an error contained in a position signal in a short period of time with high accuracy to be able to remove the error.

The present invention in its one aspect provides a measurement apparatus as specified in claims 1 to 6.

Further features and aspects of the present invention will become apparent from the following description of exemplary embodiments with reference to the attached drawings.

BRIEF DESCRIPTION OF THE DRAWINGS

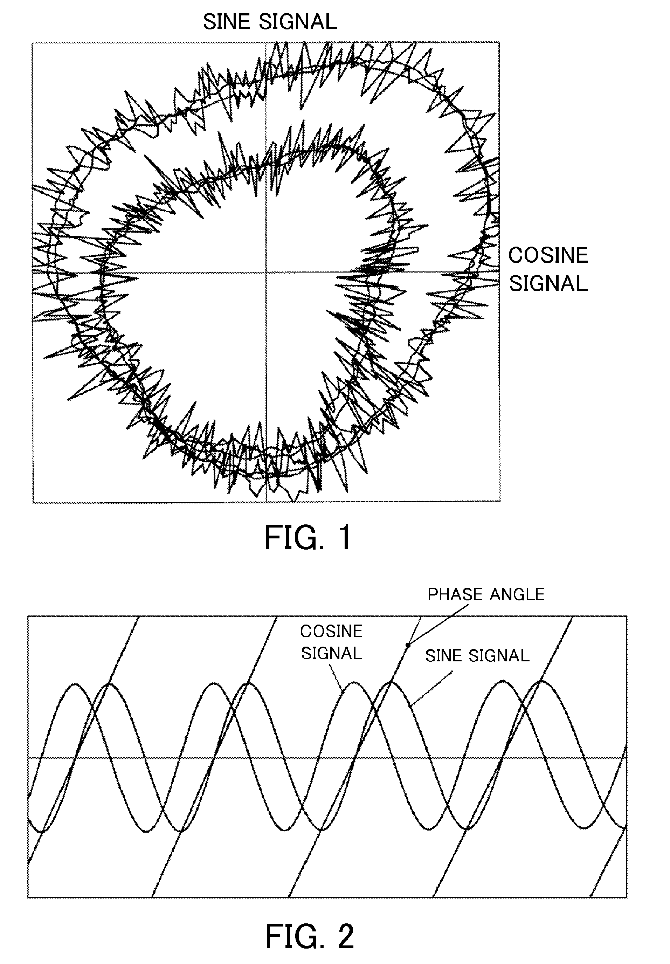

Fig. 1 is a view showing a calculation result of the present embodiment.

Fig. 2 is a view showing signals used in the present embodiment and a phase angle calculated from the signals.

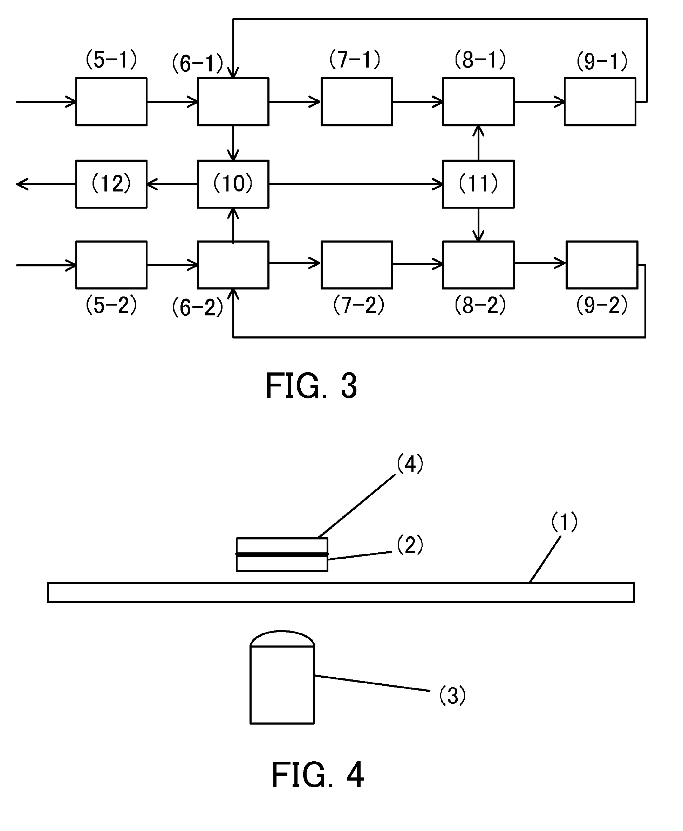

Fig. 3 is a block diagram showing one example of a measurement apparatus of the present embodiment.

Fig. 4 is an overall view showing one example of a linear encoder.

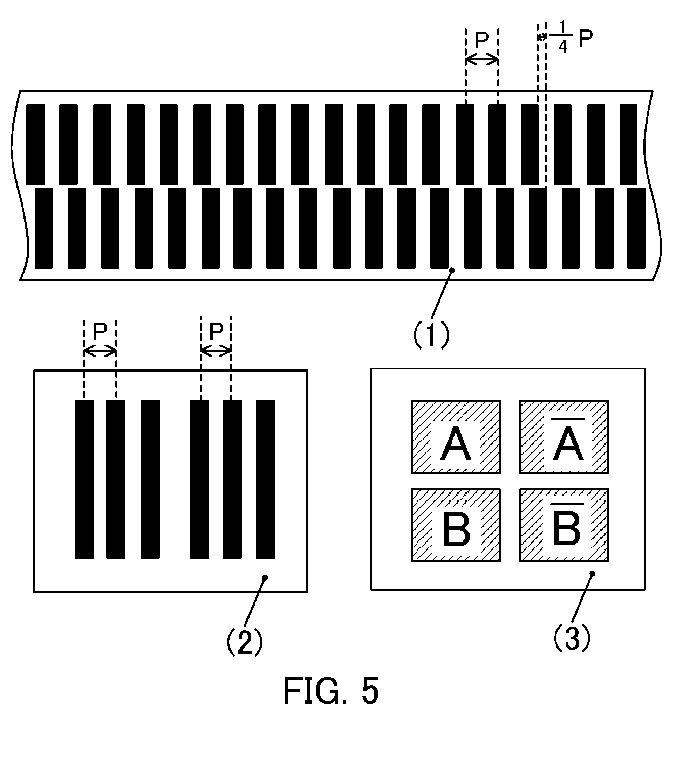

Fig. 5 is a detail view showing one example of a linear encoder.

DESCRIPTION OF THE EMBODIMENTS

Exemplary embodiments of the present invention will be described below with reference to the accompanied drawings. In each of the drawings, the same elements will be denoted by the same reference numerals and the duplicate descriptions thereof will be omitted.

A measurement apparatus of the present embodiment measures an object to be measured using two signals approximated by a cosine function and a sine function which represent a position of the object to be measured. Fig. 3 is a block diagram showing one example of the measurement apparatus of the present embodiment.

In the measurement apparatus of the present embodiment, a plurality of signals (position signals) showing the object to be measured are outputted from a light receiving element provided in the measurement apparatus. In the present embodiment, two periodic signals approximated by a cosine function and a sine function are outputted as the plurality of signals. Since the two signals (the cosine signal and the sine signal) outputted from an encoder are analog signals, the signals are inputted to A/D converters 5-1 and 5-2, respectively. The cosine signal and the sine signal inputted to the A/D converters 5-1 and 5-2 are converted into digital signals by the A/D converters 5-1 and 5-2, respectively.

Subsequently, the cosine signal and the sine signal converted into the digital signals are inputted to error correction portions 6-1 and 6-2, respectively. The error correction portions 6-1 and 6-2 remove an amplitude error, an offset error, and a phase error which are contained in each of the inputted cosine signal and sine signal. As the error correction portions 6-1 and 6-2, a correction unit which corrects each of the errors using a peak value or the like of the output signal is used.

The error correction portions 6-1 and 6-2 remove at least parts of the amplitude error, the offset error, and the phase error of each of the cosine signal and the sine signal. Therefore, the cosine signal and the sine signal outputted from the error correction portions 6-1 and 6-2, respectively, are corrected to signals which are closer to ideal output signals.

If, for example, an amplitude G and an offset Z of a cosine signal A are known, the error correction portion 6-1 can obtain a cosine signal X from which the influence of these fluctuations is removed by using the following expression 1.

$$X = (A - Z) / G \dots (1)$$

An apparatus which is able to perform such an error correction can be electronically realized by using a subtracter and a divider.

With regard to the sine signal, the error correction portion 6-2 can correct an error contained in the sine signal by a calculation similar to that of the error correction portion 6-1. With regard to other error components, the error correction portions 6-1 and 6-2 can also remove the error components by adding various kinds of arithmetic units if an incorporation amount of the error components is known.

For example, a value expected at the time of designing the measurement apparatus is given to the error correction portions 6-1 and 6-2 as an initial value of the incorporation amount (error incorporation amount) of the error component. The initial value given to the error correction portions 6-1 and 6-2 can be corrected in accordance with the shift from an ideal condition of the correction signal corrected by a method described later. The error incorporation amount given to the error correction portions 6-1 and 6-2 is updated by such a method. Therefore, the error correction portions 6-1 and 6-2 can always predict the latest error incorporation amount.

If the error incorporation amount is estimated by the method described later, the influence on the phase calculation by the error incorporation amount can be calculated and the calculated phase can also be corrected in accordance with the error incorporation amount. Therefore, when the error incorporation amount is smaller than a predetermined value, the error correction portions 6-1 and 6-2 may be omitted in the present embodiment.

The cosine signal and the sine signal in which the error has been corrected by the error correction portions 6-1 and 6-2 are inputted to quadratic regression arithmetic units 7-1 and 7-2, respectively. The quadratic regression arithmetic units 7-1 and 7-2 perform a quadratic regression calculation for the cosine signal and the sine signal, respectively.

In the present embodiment, the quadratic regression units 7-1 and 7-2 perform the regression calculation after at least a part of the error contained in each of the cosine signal and the sine signal is removed by the error correction portions 6-1 and 6-2.

Although the quadratic regression calculation itself is known, it is preferable that the calculation is simplified when performing a high-speed calculation by a logic circuit such as an LSI (Large-scale integrated circuit) or an FPGA (Field Programmable Gate Array). Therefore, in the quadratic regression arithmetic units 7-1 and 7-2 of the present embodiment, it is preferable that the calculation is performed by the following procedure.

First, a correction signal $x_k$ is approximated as represented by expression 2 as a quadratic expression of time k.

$$x_k = a \cdot k^2 + b \cdot k + c \ \dots \ (2)$$

In the present embodiment, in order to simplify the calculation, time k for each sample $x_k$ used for the regression is assigned as an odd integer centered around zero.

In the present embodiment, when the sampling number of the signal used for the quadratic regression is small, the noise contained in the signal can not be effectively removed. Therefore, it is preferable that the sampling number of the signal used for the quadratic regression is large. For example, it is preferable that the sampling number is equal to or larger than 8.

On the other hand, when the quadratic regression is performed, each of the cosine signal and the sine signal is approximated by a parabola (a quadratic curve). Therefore, if the sampling number used for the quadratic regression among the sampling number included in one period of the cosine signal and the sine signal is large, the accuracy of the approximation is deteriorated. Therefore, in the present embodiment, it is preferable that, for example, the sampling number which is equal to or smaller than 1/4 among the sampling number in one period of the cosine signal and the sine signal is used.

The sampling for each signal is performed at regular intervals. Therefore, the sampling number equal to or less than 1/4 means the number of samples which exist in a range of 1/4 period of each signal. In this case, for example, the quadratic regression is performed using samples which exist in the range of equal to or shorter than 1/4 of one period of the signal centered around a peak value (maximum value or minimum value) of the signal.

According to the relation described above, it is preferable that 32 or more position signals are sampled per one period of the signal as the sampling number of the periodic signal in the present embodiment. Generally, high position accuracy is required at a stop position. In the present embodiment, a moving speed is extremely low immediately before stopping, and further the error can be estimated at short moving intervals according to the method of the present embodiment. Therefore, sampling 32 or more values per one period of the signal can be practically achieved.

However, the present embodiment is not limited to this. In accordance with the accuracy required for the measurement apparatus, other specifications, or the like, the sampling number used for the quadratic regression may be set to 8 or smaller, and the quadratic regression may be performed by using samples in a range broader than the range of 1/4 of one period of the signal.

In the following description of the present embodiment, the sampling number of the signal used for the regression is 8, and the time corresponding to each sample $X_k$ is -7, -5, -3, -1, 1, 3, 5, and 7. In this case, coefficients a, b, and c of expression 2 are calculated using expressions 3 to 5, respectively.

$$a = (S_{xk2} - S_{k2} \cdot S_x) / (S_{k4} - S_{k2}^2) \ \dots \ (3)$$

$$b = S_{xk} / S_{k2} \ \dots \ (4)$$

$$c = S_x - a \cdot S_{k2} \ \dots \ (5)$$

Here, $S_x$, $S_{xk}$, $S_{xk2}$, $S_{k2}$, and $S_{k4}$ are an average of x, x·k, x·k$^2$, k$^2$, and k$^4$, respectively. Each of $S_{k2}$ and $S_{k4}$ is given by a constant value in accordance with the sampling number. When the sampling number is N, $S_x$, $S_{xk,}$ and $S_{xk2}$ are obtained using N-th previous data $x_N$ and latest data $x_0$ to update each of average values $S_x'$, $S_{xk}'$, and $S_{xk2}'$, which has been previously calculated, using expressions 6 to 8 respectively.

$$S_x \ = \ S_x' + (X_0 - X_N)/N \ \ \dots \ \ (6)$$

$$S_{xk} \ = \ S_{xk}' - 2 \cdot S_x' + \{(N-1)X_0 + (N+1)X_N\}/N \ \ \dots \ \ (7)$$

$$S_{xk2} \ = \ S_{xk2}' - 4 \cdot S_{xk}' + 4 \cdot S_x' + \{(N-1)^2 X_0 - (N+1)^2 X_N\}/N \ \ \dots$$

$$(8)$$

In the embodiment, when $2^N$ is chosen for N, the division is converted into a shift calculation and the calculation is further simplified.

These average values are updated in a state where an initial value is set to zero. However, the average value is invalid and the error measurement calculation is not performed until N times updates are performed. When this method is not correctly performed such as a case where the position signal is abruptly changed, each of the average values is initialized to zero, and the measurement calculation of the error is suppressed until the update using N times continuous valid data is performed afterward.

Next, a calculation procedure of a signal at a specific phase angle will be described.

The error corrected cosine signal and sine signal which have been outputted from the error correction portions 6-1 and 6-2, respectively, are inputted to a phase arithmetic unit 10. The phase arithmetic unit 10 calculates phase information using the corrected cosine signal and sine signal to output a phase signal representing the phase information. The phase arithmetic unit 10 is, for example, constituted by a known arctangent arithmetic unit. The arctangent arithmetic unit performs an arctangent calculation for the cosine signal and the sine signal to convert these signals into a phase (a position of the object to be measured).

The phase signal outputted from the phase arithmetic unit 10 is inputted to a controller 11. The controller 11 calculates a signal x at times -1 and 1 using the phase signal from the phase arithmetic unit 10, and determines whether or not the phase angles at times -1 and 1 sandwich a targeted predetermined phase angle (target phase angle). When the controller 11 determines that the phase angles at times -1 and 1 sandwich the target phase angle, it commands an interpolation arithmetic unit to perform the following calculation. The interpolation arithmetic unit is provided inside memories 8-1 and 8-2. The embodiment is not limited to this, but the interpolation arithmetic unit may be provided inside the controller 11 for example.

The interpolation arithmetic unit performs a weighted average calculation using a difference between each of the phase angles at times -1 and 1 and the target value in accordance with instructions from the controller 11. Subsequently, it calculates a value of the signal x at a specific phase angle (target phase angle). The interpolation arithmetic unit of the present embodiment, for example, obtains values of the cosine signal and the sine signal at a phase angle kn/N (N is even number which is equal to or greater than 2, and k is an integer between 0 and 2N-1) as a specific phase by the interpolation. The present embodiment is not limited to this, but the range of k at the above phase angle may be set to an integer between 0 and 4N-1 (N is an even number which is equal to or greater than 2).

Thus, the interpolation arithmetic unit obtains the value at the specific phase of each of the cosine signal and the sine signal using information (regression coefficient) calculated by the quadratic regression arithmetic units 7-1 and 7-2. These values are stored in the memories 8-1 and 8-2 as regression estimate values at the target phase angle.

The regression estimate values stored in the memories 8-1 and 8-2 correspond to a maximum value or a minimum value of the cosine signal and the sine signal used for a common error correction technology. Error estimation portions 9-1 and 9-2 estimate the error contained in each of the corrected signals using the values at these specific phases (the maximum value and the minimum value). Thus, the error estimation portions 9-1 and 9-2 estimate the error contained in each signal using the values (the maximum value and the minimum value) at the specific phase of each of the cosine signal and the sine signal obtained by the interpolation arithmetic unit. As error estimation portions 9-1 and 9-2, known error estimation portions can be used.

The error incorporation amounts estimated by the error estimation portions 9-1 and 9-2 are fed back to the error correction portions 6-1 and 6-2, respectively. The error incorporation amounts fed back to the error correction portions 6-1 and 6-2 update the error incorporation amounts previously given to the error correction portions 6-1 and 6-2. Since the error incorporation amounts given to the error correction portions 6-1 and 6-2 are updated, the subsequent error correction can be performed with higher accuracy. Thus, the error correction portions 6-1 and 6-2 correct (remove) the error estimated from a value at a specific phase of each of the cosine signal and the sine signal obtained by the interpolation arithmetic unit.

A phase arithmetic unit 10 calculates a position of the object to be measured based on the cosine signal and the sine signal after the error is removed by the error correction portions 6-1 and 6-2. A phase error correction portion 12 corrects phase information (phase signal) calculated by the phase arithmetic unit 10 in accordance with these errors contained in the corrected signal. In other words, the phase error correction portion 12 corrects the phase information in accordance with the magnitude of the error estimated from the value of the specific phase of each of the cosine signal and the sine signal.

Next, a correction result by the measurement apparatus of the present embodiment will be described.

Fig. 1 shows a calculation result by the measurement apparatus of the present embodiment. A cosine signal is plotted for the horizontal axis, and a sine signal is plotted for the vertical axis. In order to make a tiny error component more visible, the displayed data is once converted to polar coordinates and the radius is enlarged by a hundred times to be represented in Fig. 1.

Fig. 2 shows a position signal (cosine signal and sine signal) after the error is corrected in the present embodiment and a phase angle (tilted line) calculated from the position signal.

In Fig. 1, a polygonal line which fluctuates in a radial direction is a position signal after the error has been corrected, and a line that shows a little fluctuation is a position signal in which a noise component has been removed by the quadratic regression. The point indicated by a square shows a value extracted at regular phase intervals of 16 points per one rotation by a method of the present invention.

The position signal shown in this example has 1000 points in total, and the number of the data per one period of the signal is estimated at around 240 because the position signal changes by more than four periods during the time. The number of the data used for the regression is 32, and it is about 1/8 of the number of the data per one period of the signal.

As is clear from Fig. 1, according to the method of the present invention, the noise component contained in the position signal is considerably suppressed, and a value of each point (a maximum value and a minimum value of the signal is included in these points) of the signal can be obtained with high accuracy even if the position signal is slightly changed.

Using these values, the magnitude of the error component contained in the signal can be estimated by a known method. The position signal is corrected using the magnitude of the estimated error component or the error contained in a phase angle calculated from this is estimated to correct it.

As described above in detail, according to the method of the present invention, the error component contained in the position signal can be measured while the position is slightly changed, and the error correction which can follow with high speed for the fluctuation of the error component in accordance with the position can be performed. When a processing apparatus of such a position signal is applied to a position control apparatus, a specific error in the vicinity of the stop point is also effectively corrected. The stop position accuracy generally required is dramatically heightened and it is a beneficial technology for a wide field of industries.

The measurement apparatus of the present embodiment performs a quadratic regression using a lot of signal values in the vicinity of a maximum value of the position signal. According to the present embodiment, a noise reduction effect similar to a conventional technology configured to reduce the noise can be obtained by averaging the maximum value and the minimum value. Therefore, the error can be corrected using signals while the position is slightly changed.

Although the error of the signal fluctuates in accordance with the change of the position, the fluctuation of the error is small when the change of the position is small. For example, in an encoder shown in Figs. 4 and 5, the fluctuation in accordance with the position of an open area ratio of a movable scale slit causes an error contained in the signal. However, because a fixed scale faces a plurality of scale slits, the error is averaged in the movement. Although only three fixed slits for each area are shown in Fig. 5, a lot of slits are provided if the encoder has an extremely-high resolution. For example, when an encoder having a slit pitch of $50\mu$m has a light receiving portion whose width is 1mm, 20 slits are provided. Therefore, the open area ratio of the 20 slits of the movable scale is averaged.

According to the measurement apparatus of the present embodiment, an error contained in a signal can also be measured with high accuracy while the position is slightly changed. Therefore, it can follow the local fluctuation of the scale properties with high speed to obtain high stop position accuracy. Therefore, according to the present embodiment, the error contained in the position signal is estimated in a short period of time with high accuracy, and a measurement apparatus which can remove it can be provided.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

In order to estimate a maximum value and a minimum value of a periodic signal, it is necessary to precisely obtain the maximum value and the minimum value of the cosine signal and the sine signal, and a trigonometric function is approximated by a parabola in the vicinity of the maximum value and the minimum value. Therefore, in the present embodiment, the regression is performed using a quadratic regression arithmetic unit, but the embodiment is not limited to this. For example, instead of the quadratic regression arithmetic unit, other regression arithmetic unit such as a linear regression arithmetic unit may be used.

A measurement apparatus of the present invention is configured to measure a position of an object to be measured using two signals approximated by a cosine function and a sine function representing the position of the object to be measured, the measurement apparatus including a regression arithmetic unit (7-1, 7-2) configured to perform a regression calculation for corresponding one of the two signals, an interpolation arithmetic unit (8-1, 8-2) configured to obtain a value at a specific phase of the corresponding one of the two signals using information calculated by the regression arithmetic unit, and an error correction portion (6-1, 6-2) configured to correct an error estimated from the value at the specific phase of the corresponding one of the two signals obtained by the interpolation arithmetic unit.

**Claims**

1. A measurement apparatus configured to measure a position of an object to be measured using two signals approximated by a cosine function and a sine function representing the position of the object to be measured, the measurement apparatus comprising:

   a regression arithmetic unit (7-1, 7-2) configured to perform a regression calculation for each of the two signals;
   an interpolation arithmetic unit (8-1, 8-2) configured to obtain a value at a specific phase of each of the two signals using information calculated by the regression arithmetic unit; and
   an error correction portion (6-1, 6-2) configured to correct an error estimated from the value at the specific phase of each of the two signals obtained by the interpolation arithmetic unit.

2. A measurement apparatus according to claim 1,
   **characterized in that** the value at the specific phase is a value at a phase angle $kn/N$ of the two signals, where N is an even number which is equal to or greater than 2 and k is an integer which is between 0 and one of 2N-1 and 4N-1.

3. A measurement apparatus according to claim 1 or 2,
   **characterized in that** the regression arithmetic unit performs the regression calculation for each of the two signals after the error correction portion removes at least a part of the error contained in the two signals.

4. A measurement apparatus according to any one of claims 1 to 3, further comprising a phase error correction portion (12) configured to correct a phase angle in accordance with a magnitude of the error estimated from the value of the specific phase of each of the two signals.

5. A measurement apparatus according to any one of claims 1 to 4,
   **characterized in that** the regression arithmetic unit is a quadratic regression arithmetic unit configured to perform a quadratic regression calculation for each of the two signals.

6. A measurement apparatus according to claim 5,
   **characterized in that** the sampling number of each of the two signals used for the quadratic regression calculation by the quadratic regression arithmetic unit is equal to or smaller than 1/4 of the sampling number included in one period of each of the signals.

SINE SIGNAL

COSINE
SIGNAL

FIG. 1

PHASE ANGLE

COSINE
SIGNAL

SINE SIGNAL

FIG. 2

(5-1)　(6-1)　(7-1)　(8-1)　(9-1)

(12)　(10)　(11)

(5-2)　(6-2)　(7-2)　(8-2)　(9-2)

# FIG. 3

(4)

(2)

(1)

(3)

# FIG. 4

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4458322 A